# DEMANDE DE BREVET EUROPEEN

(11) **EP 1 246 098 A1**
(43) Date de publication de la demande: **02.10.2002**
(21) Numéro de dépôt: 01400829.6
(22) Date de dépôt: 30.03.2001
(51) Int. Cl.: G06F 17/60

(54) **Procédé de connexion informatisée d'utilisateurs à une pluralité d'informateurs et système de mise en oeuvre**

(71) Demandeur: Artema, 75008 Paris (FR)
(72) Inventeur: Dresch, Caroline, 75008 Paris (FR)
(74) Mandataire: Casalonga, Axel

(57) **Abrégé**

Procédé de connexion informatisée d'utilisateurs à une pluralité d'informateurs par un réseau d'interconnexion tel que le réseau internet, caractérisé par le fait que:
chaque utilisateur transmet une question à un administrateur commun, après s'être identifié auprès de l'administrateur, la question pouvant être associée à un fichier de données également transmis à l'administrateur, sous forme cryptée, par l'utilisateur et susceptible de représenter une oeuvre de l'esprit;
que l'administrateur conserve la question et le fichier de données en leur affectant des codes d'accès et d'identification propres à la question, au fichier de données et à l'utilisateur, ces codes étant transmis par l'administrateur à l'utilisateur;
que l'administrateur examine la question et en effectue s'il y a lieu une traduction avant de la transmettre à un informateur sélectionné par l'administrateur en fonction de la question, la transmission de la question étant accompagnée des codes d'accès et d'identification permettant à l'informateur d'accéder au fichier de données sans toutefois pouvoir le modifier;
que l'informateur transmet en réponse une information à l'administrateur, cette information étant conservée par l'administrateur avec la question;
que l'administrateur avertit l'utilisateur de la réception de la réponse;
et que l'utilisateur peut prendre connaissance de la réponse, au moyen des codes d'accès et d'identification précités.

## Description

La présente invention a pour objet un procédé de connexion informatisée par un réseau d'interconnexion tel que le réseau internet entre des utilisateurs souhaitant recevoir des réponses à des questions éventuellement liées à des fichiers de données et une pluralité d'informateurs capables de formuler des informations en réponse.

La protection de la propriété intellectuelle par le droit d'auteur ou le copyright prend de plus en plus d'importance. Les créateurs d'oeuvres de l'esprit, qu'il s'agisse d'oeuvres littéraires, d'oeuvres d'art graphique, d'art plastique, de photographies ou de logiciels, souhaitent pouvoir bénéficier dans les meilleures conditions de la protection qui leur est conférée par la législation. L'harmonisation des différentes législations sur la protection des oeuvres de l'esprit est cependant très insuffisante et les dispositions légales et réglementaires sont très différentes selon les pays. Néanmoins, l'établissement d'une date de création aussi précise que possible est une exigence universellement reconnue pour que l'auteur puisse bénéficier d'une protection.

Pour permettre aux auteurs d'établir une telle date de création, différents procédés ont été proposés dans le passé. Certaines administrations nationales ont ainsi prévu des systèmes de dépôt de nature à établir une date certaine pour les éléments ayant fait l'objet du dépôt. En l'absence de systèmes officiels, différents organismes se sont créés pour ouvrir également aux auteurs des possibilités de dépôt sur registre d'informations ou d'oeuvres de l'esprit présentent sous forme de papier.

Plus récemment et en particulier avec le développement de réseaux d'interconnexion informatisés tels que le réseau internet, on a pu offrir aux créateurs et aux auteurs des moyens plus rapides pour transmettre et conserver en mémoire des fichiers de données numérisées qui peuvent être visualisés sous la forme d'oeuvres de l'esprit et conservés en mémoire pendant une durée importante, des moyens étant prévus pour assurer à la fois le secret et l'authentification certaine de l'oeuvre et de l'auteur, de façon à établir en cas de besoin une date certaine de dépôt pour une oeuvre déterminée. C'est ainsi que l'Office américain du copyright a développé un système de dépôt et d'enregistrement de copyright sous forme numérisée selon un procédé baptisé "CORDS" (Copyright Office Electronic Registration, Recordation and Deposit System) dont les premières utilisations ont eu lieu dès 1996 et dont l'architecture est décrite dans le brevet US 6 135 646.

Ces procédures et systèmes de dépôt en ligne de données numérisées ont donné satisfaction et sont amenés à se développer dans l'avenir.

Toutefois, les utilisateurs, auteurs et créateurs qui ont procédé à un tel dépôt en ligne par un réseau d'interconnexion tel que l'Internet ou qui envisagent de procéder à un tel dépôt, restent jusqu'à présent démunis lorsqu'il s'agit de déterminer les droits dont ils peuvent bénéficier selon les législations nationales du monde entier ou pour connaître les modalités d'exercice de ces droits, qu'il s'agisse de contrats d'exploitation ou de contentieux. L'absence d'informations juridiques sur les conditions de protection et d'exercice des droits dans les différents pays du monde entraîne fréquemment des dépôts insuffisants ou incomplets qui ne permettent pas à l'auteur d'obtenir ultérieurement une protection convenable de son oeuvre. L'obtention de tels renseignements juridiques avant même le dépôt d'une oeuvre ou de préférence peu après un tel dépôt, permettrait à un auteur de procéder au dépôt dans les meilleures conditions possibles ou de corriger un dépôt déjà effectué, par exemple en remplaçant celui-ci par un nouveau dépôt de manière à optimiser la protection ultérieure dans les différents pays où l'auteur souhaite obtenir une protection.

La présente invention a pour objet de résoudre ces difficultés et d'offrir aux utilisateurs, créateurs et auteurs d'oeuvres de l'esprit, des moyens simples leur permettant d'optimiser leur protection et de mieux connaître la législation locale dans les différents pays du monde.

Le procédé selon l'invention permet la connexion informatisée d'utilisateurs à une pluralité d'informateurs par un réseau d'interconnexion tel que le réseau internet.

Chaque utilisateur transmet une question à un administrateur commun, après s'être identifié auprès de l'administrateur, la question pouvant être associée à un fichier de données également transmis à l'administrateur, sous forme cryptée, par l'utilisateur et susceptible de représenter une oeuvre de l'esprit.

L'administrateur conserve la question et le fichier de données en leur affectant des codes d'accès et d'identification propres à la question, au fichier de données et à l'utilisateur, ces codes étant transmis par l'administrateur à l'utilisateur.

L'administrateur examine la question et en effectue s'il y a lieu une traduction avant de la transmettre à un informateur sélectionné par l'administrateur en fonction de la question, la transmission de la question étant accompagnée des codes d'accès et d'identification permettant à l'informateur d'accéder au fichier de données sans toutefois pouvoir le modifier.

L'informateur transmet en réponse une information à l'administrateur, cette information étant conservée par l'administrateur avec la question.

L'administrateur avertit l'utilisateur de la réception de la réponse et l'utilisateur peut prendre connaissance de la réponse, au moyen des codes d'accès et d'identification précités.

Dans un mode de mise en oeuvre préféré de l'invention, le fichier de données est transmis par l'utilisateur avant transmission de la question, l'administrateur conservant pendant une durée déterminée, généralement plusieurs années, ledit fichier de données avec les codes d'accès et d'identification propres au fichier de données et à l'utilisateur. Le fichier de données, qui peut par exemple représenter une oeuvre littéraire, d'art plastique, photographique, un logiciel ou analogue, peut ainsi être stocké par l'administrateur d'une manière intangible de façon à permettre ultérieurement d'établir une preuve de la date de création des données.

Dans un mode de mise en oeuvre, l'administrateur transmet à l'utilisateur, à réception de la question, une demande de paiement et vérifie le règlement avant de procéder à l'examen de la question et à sa transmission à l'informateur.

Avant la vérification positive du paiement, la question et éventuellement le fichier de données, sont stockés de manière provisoire, tandis qu'après la vérification positive du paiement, le stockage est fait de manière définitive, c'est à dire pour plusieurs années comme indiqué précédemment. Dans tous les cas, le stockage est fait de manière intangible dès lors que l'utilisateur a vérifié le caractère exact des données stockées.

Dans un mode de mise en oeuvre avantageux, l'administrateur conserve pendant une durée déterminée, par exemple de quelques années, toutes les questions et toutes les informations en réponse correspondantes avec les codes d'accès et d'identification propres à chaque question, au fichier de données associé et à chaque utilisateur. Chaque utilisateur peut alors accéder aux questions qu'il a lui-même posées ainsi qu'aux informations en réponse correspondantes.

Le système informatisé selon l'invention permet la transmission d'informations par un réseau d'interconnexion tel que le réseau internet entre des utilisateurs et une pluralité d'informateurs. Le système comprend des moyens de mémoire pour des données numériques cryptées incluant des questions formulées par les utilisateurs, éventuellement un ou plusieurs fichiers de données et des codes d'accès et d'identification propres à chaque question, à chaque fichier de données et à chaque utilisateur.

D'autres moyens de mémoires sont prévus pour des données numériques cryptées incluant des informations en réponse aux questions, préparées par différents informateurs sélectionnés.

Un poste central d'administration comprend des mémoires de stockage de bases de données numériques pour les fichiers de données, pour les coordonnées des utilisateurs et des informateurs et pour les questions et les informations en réponse et des moyens de programme capables de générer et de lire des codes d'accès et d'identification et de gèrer la transmission de messages entre le poste central et les utilisateurs et entre le poste central et les informateurs.

Une pluralité de postes individuels d'utilisateur sont reliés par l'intermédiaire du réseau d'interconnexion au poste central d'administration de façon à permettre à chaque utilisateur de transmettre audit poste central des données numériques cryptées incluant une question, éventuellement un ou plusieurs fichiers de données et des codes d'accès et d'identification et de recevoir des messages émis par le poste central.

Une pluralité de postes individuels d'informateur sont reliés par l'intermédiaire du réseau d'interconnexion au poste central d'administration de façon à permettre à chaque informateur de recevoir des messages émis par le poste central contenant des codes d'accès correspondant à la question et aux fichiers de données accompagnant la question et de transmettre audit poste central une information en réponse à une question.

Le poste central peut également comprendre des moyens pour mémoriser un ensemble de questions type.

Dans un mode de réalisation préféré, le poste central comprend en outre des moyens pour mémoriser et conserver en mémoire pendant une durée déterminée, les questions et les informations en réponse correspondantes associées chacune à des codes d'accès et d'identification de l'utilisateur correspondant.

L'invention sera mieux comprise à l'étude de quelques modes de réalisation illustrés par les dessins annexés, sur lesquels :
- la figure 1 illustre schématiquement les principaux éléments d'un système informatisé selon la présente invention;
- la figure 2 est un diagramme illustrant les différentes étapes permettant l'identification d'un utilisateur;
- la figure 3 est un organigramme montrant les principales étapes de mise en oeuvre d'un exemple du procédé de l'invention.

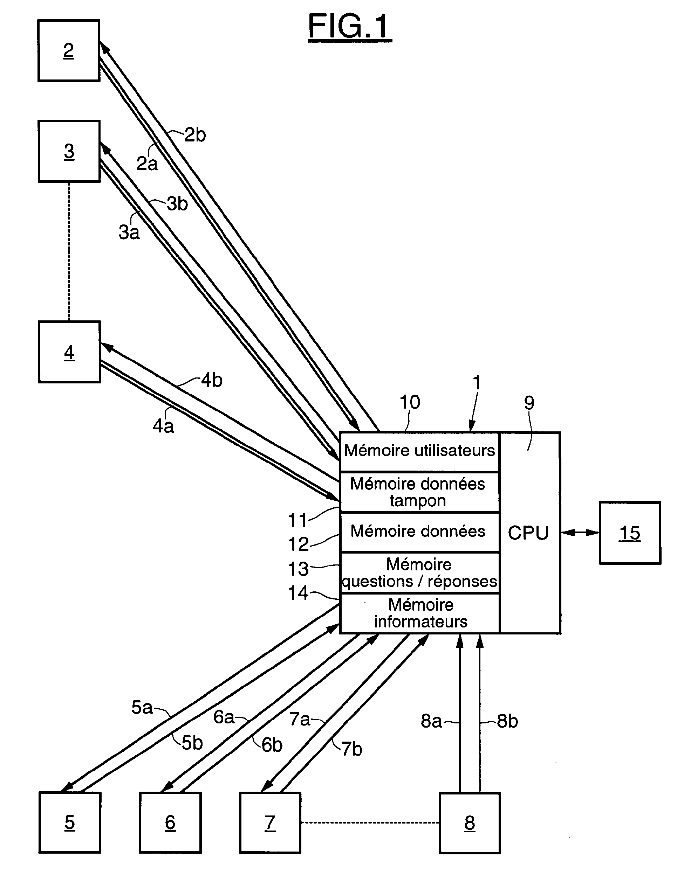

Tel qu'il est illustré sur la figure 1, le système informatisé selon la présente invention comprend un poste central d'administration 1, comprenant différentes mémoires, une pluralité de postes individuels 2, 3 et 4 d'utilisateurs et une pluralité de postes individuels d'informateurs 5, 6, 7 et 8. On comprendra bien entendu que le nombre de postes d'utilisateurs peut être quelconque de même que le nombre de postes d'informateurs.

Tous les postes individuels d'utilisateurs et d'informateurs 2 à 8 sont reliés par l'intermédiaire d'un réseau d'interconnexion tel que le réseau internet au poste central d'administration 1 qui est commun à l'ensemble des postes individuels 2 à 8. Le poste central d'administration comprend schématiquement une unité de processeur 9 (CPU) incluant des moyens de programme destinés au fonctionnement de l'ensemble du système. Le poste central d'administration 1 comprend en outre différentes mémoires et en particulier, tel qu'illustré sur la figure 1, une mémoire utilisateurs 10 capable de stocker des renseignements d'identification concernant les utilisateurs. C'est ainsi que chaque utilisateur pourra être identifié par son adresse postale et son adresse électronique (Email). De plus, chaque utilisateur sera défini au moyen d'un compte client comportant un mot de passe, un code d'accès individuel et un numéro de client. D'autres informations pourront également être contenues dans la mémoire utilisateurs 10, telles que par exemple, pour chaque utilisateur, les conditions de paiment souhaitées, l'acceptation ou non d'une formule d'abonnement ou toutes autres caractéristiques concernant les utilisateurs utiles pour le fonctionnement de l'ensemble du système.

Le poste central d'administration 1 comporte encore une mémoire-tampon 11 pour des fichiers de données représentatifs d'oeuvres destinées à faire l'objet d'un dépôt sous forme numérisée et d'une conservation de longue durée (5 à 10 ans) sous forme intangible et généralement associés à une question juridique posée par un utilisateur. A cette mémoire-tampon 11, est associée une mémoire-données définitive 12 pour la conservation intangible de longue durée des fichiers de données, les fichiers de données étant transférés de la mémoire-tampon 11 dans la mémoire-données 12 en fonction de conditions de règlement comme expliqué plus loin. On comprendra que la mémoire-données 12 peut être en partie délocalisée et comprendre des disques optiques ou des supports magnétiques extérieurs comprenant des copies de sauvegarde des données, l'ensemble étant conservé de manière sécurisée et intangible.

Le poste central d'administration 1 comporte en outre une mémoire questions/réponses 13 capable de stocker pendant une durée déterminée d'au moins quelques années (2 à 5 ans par exemple) l'ensemble des questions posées par les différents utilisateurs ainsi que les réponses fournies par les différents informateurs. A chaque couple de question/réponse est associée une codification permettant de lier la question et sa réponse à l'utilisateur particulier qui a posé la question.

Enfin, le poste central d'administration 1 comporte une mémoire-informateurs 14 capable de stocker tous les renseignements utiles concernant les informateurs, et en particulier leurs noms, leurs coordonnées, leur adresse postale, leur adresse électronique, leur spécialité et le pays dans lequel ils exercent, et d'une manière générale tous renseignements concernant les informateurs, utiles pour permettre d'effectuer un choix convenable parmi les différents informateurs en fonction de la question posée.

L'administrateur proprement dit, référencé 15 sur la figure 1, peut avoir accès au poste central d'administration 1 de façon à intervenir à tout instant pour déclencher l'émission de messages vers les postes individuels d'utilisateurs 2 à 4 ou les postes individuels d'informateurs 5 à 8.

On a également représenté sur la figure 1 les flux de transfert de données et de messages à partir des différents postes utilisateurs 2 à 4. Les flèches doubles correspondantes 2a, 3a, 4a symbolisent le transfert sous forme cryptée des fichiers de données représentant une oeuvre ou un ensemble d'oeuvres qu'un utilisateur déterminé souhaite faire conserver par le système de façon à en établir une date de dépôt certaine et au sujet de laquelle l'utilisateur entend obtenir une réponse à différentes questions juridiques. Le flux de données représenté par les flèches doubles 2a, 3a, 4a peut donc comprendre en général à la fois un ou plusieurs fichiers de données et une question associée. En variante, le fichier de données est transmis au préalable et fait l'objet d'un dépôt, la question associée étant transmise ultérieurement par l'utilisateur. Dans une autre variante, la question transmise simultanément avec le fichier de données est cependant traitée après que le fichier de données ait fait l'objet d'une procédure de dépôt, c'est-à-dire d'un enregistrement et d'un stockage intangible de longue durée dans la mémoire-données 12. On peut également envisager de procéder au dépôt proprement dit du fichier de données en mémoire-données 12 uniquement après que la réponse à la question ait été fournie. La transmission des fichiers de données est faite de préférence sous forme cryptée, par exemple par une combinaison de clé publique et de clé personnelle mise en oeuvre par un algorithme de cryptage tel qu'un algorithme DES.

Les flèches simples 2b, 3b, 4b représentent l'émission par le poste central d'administration 1 à destination des différents postes individuels d'utilisateurs 2 à 4 de messages pour la gestion du système. On notera que ces transmissions de messages, qui se font par courrier électronique par l'intermédiaire du réseau d'interconnexion, ne comportent pas à proprement parler le contenu du fichier de données qui a été initialement transmis par l'utilisateur et qui reste stocké dans les mémoires 11 ou 12 du poste central d'administration 1.

Les flèches correspondantes 5a, 5b; 6a, 6b; 7a, 7b; et 8a, 8b représentent également le transfert de messages par courrier électronique par l'intermédiaire du réseau d'interconnexion entre le poste central d'aministration 1 et les différents postes individuels d'informateurs 5 à 8. Là encore, on notera que les fichiers de données ne sont pas transmis par courrier électronique mais restent au contraire dans les mémoires 11 et 12 du poste central d'administration. En tant que de besoin, les différents messages transmis aux postes individuels d'informateurs ou aux postes individuels d'utilisateurs comportent simplement une adresse précise URL (Uniform Resource Locator) de la ou des pages où sont stockées les données correspondant à une oeuvre déterminée permettant, après authentification convenable, à l'informateur ou à l'utilisateur correspondant d'obtenir un accès au fichier de données mémorisé représentatif de l'oeuvre, dans les mémoires 11 ou 12 ou aux questions-réponses mémorisées dans la mémoire 13. Les messages transmis sont de préférence protégés, par exemple par un système de courrier électronique PEM (Privacy Enhanced Mail) qui assure la confidentialité et l'authentification du correspondant. Dans certains cas, les messages peuvent être simplement transmis par connexion directe selon protocole du type TCP/IP.

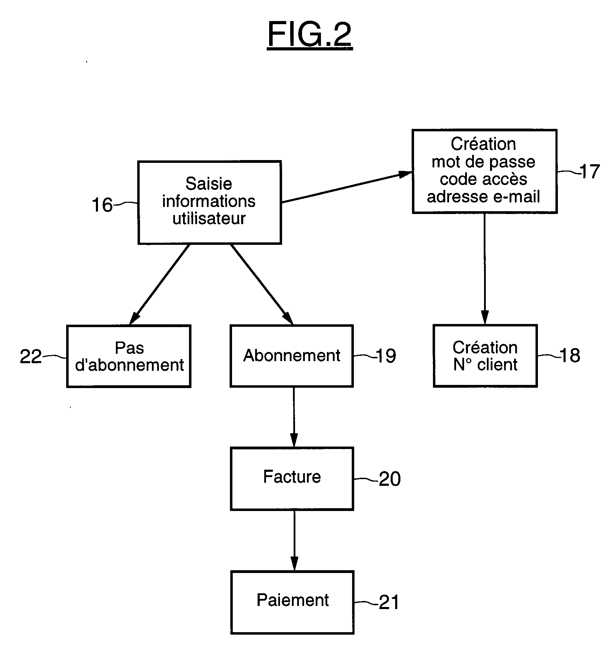

La première étape de mise en oeuvre du procédé de l'invention est illustrée sur la figure 2. Il s'agit de la procédure d'inscription d'un utilisateur qui n'a pas encore auparavant utilisé le système.

A partir de son poste individuel, un utilisateur, après s'être connecté par le réseau d'interconnexion au poste central d'administration 1, peut saisir les différentes informations qui lui sont demandées concernant notamment son identité, son adresse postale, son adresse électronique. Cette opération est référencée 16 sur la figure 2. Elle entraîne automatiquement, par le logiciel 9 chargé dans le poste d'administration centrale 1, la création à l'étape 17 d'un compte client défini par un mot de passe, un code d'accès et comportant en outre une adresse électronique. L'étape 18 permet en outre la création d'un numéro de client qui reste attaché à l'utilisateur pour toute opération ultérieure demandée par l'utilisateur au système.

L'utilisateur est ensuite amené à choisir entre une formule avec abonnement 19, auquel cas une facture lui est adressée en 20, donnant lieu à un paiement 21. Dans une autre formule, l'utilisateur choisit de ne pas s'abonner selon 22, le système étant amené ultérieurement à émettre des factures individuelles pour chaque opération ponctuelle.

Un utilisateur s'étant ainsi inscrit dans le système peut accéder aux différentes possibilités qui lui sont offertes.

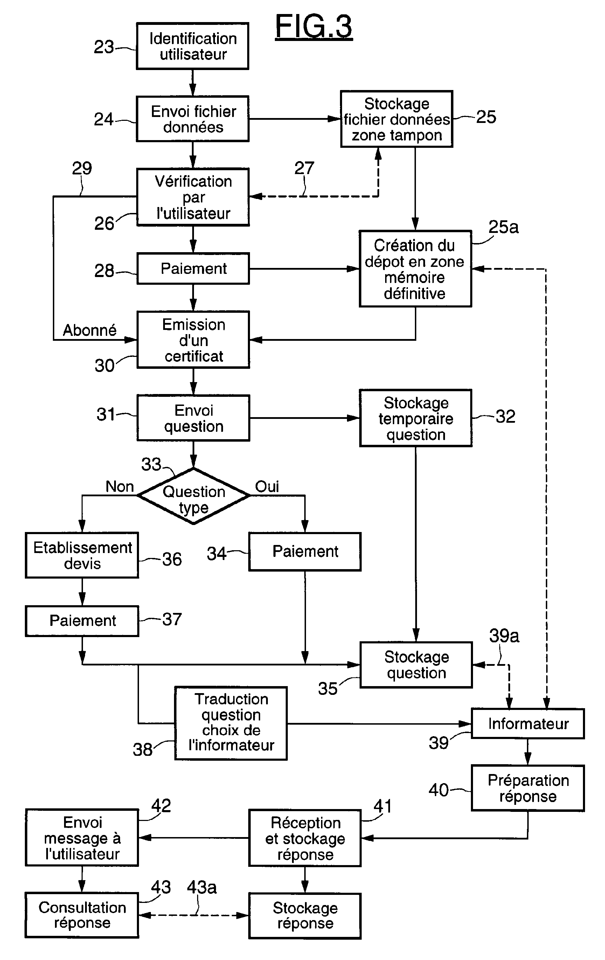

Un exemple de mise en oeuvre est illustré sur la figure 3.

L'utilisateur se connecte tout d'abord par son poste individuel au poste central d'administration 1 et fournit des informations concernant son identification (mot de passe, code d'accès), qui font l'objet d'une vérification à l'étape 23. L'utilisateur transmet ensuite par le réseau d'interconnexion, selon par exemple la flèche 2a, un fichier de données à l'étape 24, ce fichier pouvant représenter une oeuvre littéraire, artistique, une photographie, etc. Le fichier de données fait l'objet d'un stockage temporaire dans une zone-tampon à l'étape 25. L'étape 26 permet à l'utilisateur de vérifier que le fichier de données qui a été reçu par le poste central d'administration 1 et est stocké dans la zone-tampon correspond bien au fichier de données qu'il entend faire conserver. A cet effet, l'utilisateur peut visualiser l'oeuvre représentée par le fichier de données en y accédant par la flèche symbolisée 27.

L'utilisateur, après cette vérification, est amené à procéder à un paiement en 28, sauf dans le cas d'un abonné 29. Le paiement déclenche la création d'un dépôt sécurisé à l'étape 25a, le fichier de données étant transféré dans la mémoire-données définitive référencée 12 sur la figure 1. Le stockage du fichier de données est ensuite maintenu de manière intangible sur une durée longue de plusieurs années.

Le poste central d'administration 1 émet ensuite un certificat de dépôt à l'étape 30, attestant le dépôt du fichier de données et reprenant les caractéristiques de celui-ci ainsi que la date de dépôt et le nom et les caractéristiques de l'utilisateur.

L'utilisateur transmet ensuite, dans l'exemple illustré sur la figure 3, une question à l'étape 31. Cette question peut par exemple consister en une interrogation sur la possibilité juridique d'obtenir une protection et sur les conditions d'obtention de cette protection dans un pays déterminé. La question peut également porter sur les conditions d'exercice d'un droit de propriété intellectuelle dans un pays déterminé. La question peut comprendre une requête de préparation d'un projet de contrat portant sur un droit de propriété intellectuelle. La question ainsi transmise par le réseau d'interconnexion fait l'objet d'un stockage temporaire à l'étape 32.

L'administrateur 15 peut alors, en examinant la question ainsi stockée, déterminer à l'étape 33 s'il s'agit d'une question type, c'est-à-dire d'une question déjà mémorisée dans la mémoire 13 qui a déjà fait l'objet d'une réponse. Dans ce cas, un paiement prédéterminé est demandé à l'utilisateur à l'étape 34, et la question est stockée dans la mémoire 13 à l'étape 35. Au cas où la question se différencie des questions précédentes ou dans le cas d'une question plus complexe, l'administrateur peut juger nécessaire d'établir un devis à l'étape 36. A cet effet, l'administrateur 15, après avoir effectué un choix parmi les informateurs dont il dispose et dont les coordonnées sont stockées dans la mémoire des informateurs 14, peut transmettre un message à un informateur déterminé, le message contenant la question posée ainsi qu'un code d'accès et d'identification, par exemple une adresse URL de la ou des pages contenant le fichier de données associé à la question permettant ainsi à l'informateur de visualiser l'oeuvre concernée par la question. A cet effet, on notera que le fichier de données comporte précisément des codes d'accès et d'identification permettant de lier une question au fichier de données correspondant.

L'informateur peut ainsi transmettre à l'administrateur un devis pour la préparation d'une information en réponse. Ce devis est alors retransmis par le poste central d'administration 1 à l'utilisateur qui a posé la question afin d'obtenir une acceptation du devis. En cas d'acceptation suivie du paiement à l'étape 37, la question initialement stockée temporairement à l'étape 32 se trouve stockée de manière définitive à l'étape 35.

Au cas où il s'avérerait nécessaire de procéder à une traduction de la question, qu'il s'agisse d'un traduction purement linguistique ou d'une simplification et d'une mise en forme d'une question, cette opération est réalisée à l'étape 38 par l'administrateur avant transmission de la question à l'informateur choisi. L'envoi d'un message à l'informateur fait à l'étape 39 lui permet de consulter la question par visualisation en 39a, ce qui déclenche la préparation par l'informateur à l'étape 40 d'une information en réponse à la question posée.

Comme indiqué précédemment, lorsque la préparation de la réponse nécessite l'examen en 39b du fichier de données associé à la question, l'informateur peut visualiser l'oeuvre correspondante en accédant à la mémoire de stockage par l'adresse URL qui lui est fournie lors de l'envoi de la question par le poste central d'administration 1.

L'information en réponse à la question est ensuite transmise par l'informateur au poste central d'administration 1 qui la reçoit et la stocke et avertit en 41 l'utilisateur ayant posé la question du fait que la réponse est disponible à une adresse URL qui lui est envoyée avec un message à l'étape 42. L'utilisateur peut alors consulter aisément la réponse à l'étape 43 par visualisation selon 43a. La réponse et la question sont stockées dans la mémoire 13 en association avec les codes d'accès et d'identification nécessaires pour lier chaque question/réponse à l'utilisateur qui a posé la question d'une part, et au fichier de données associé d'autre part.

On notera que dans le procédé selon l'invention, le fichier de données transmis sous forme cryptée selon un processus sécurisé, ne transite sous cette forme que lors de la transmission par l'utilisateur vers le poste central d'administration. Pour toutes les autres étapes de mise en oeuvre du procédé, les messages transmis par courrier électronique ne comportent pas les données correspondant à l'oeuvre matérialisée par le fichier de données qui restent stockées dans la mémoire 12 du poste central d'administration. C'est par la transmission d'une adresse URL spécifique dans les messages envoyés par courrier électronique que l'informateur peut obtenir un accès au fichier de données stocké dans la mémoire du poste central d'administration. De la même manière, l'utilisateur, pour prendre connaissance de l'information en réponse, reçoit un message du poste central d'administration contenant simplement une adresse URL qui lui permet d'avoir accès à l'information en réponse stockée dans la mémoire 13 du poste central d'administration.

On comprend qu'il en résulte une amélioration de la sécurité, le transfert de données ne se faisant qu'après un protocole d'authentification précis, tel qu'il est utilisé communément dans les accès sécurisés aux sites du réseau d'interconnexion internet. Grâce à ce procédé, on peut en outre s'assurer du caractère intangible de l'oeuvre mémorisée et stockée sous forme d'un fichier de données, l'informateur n'étant pas en mesure de modifier les données mémorisées.

## Revendications

1. Procédé de connexion informatisée d'utilisateurs à une pluralité d'informateurs par un réseau d'interconnexion tel que le réseau internet **caractérisé par le fait que**:
chaque utilisateur transmet une question à un administrateur commun, après s'être identifié auprès de l'administrateur, la question pouvant être associée à un fichier de données également transmis à l'administrateur, sous forme cryptée, par l'utilisateur et susceptible de représenter une oeuvre de l'esprit;
que l'administrateur conserve la question et le fichier de données en leur affectant des codes d'accès et d'identification propres à la question, au fichier de données et à l'utilisateur, ces codes étant transmis par l'administrateur à l'utilisateur;
que l'administrateur examine la question et en effectue s'il y a lieu une traduction avant de la transmettre à un informateur sélectionné par l'administrateur en fonction de la question, la transmission de la question étant accompagnée des codes d'accès et d'identification permettant à l'informateur d'accéder au fichier de données sans toutefois pouvoir le modifier;
que l'informateur transmet en réponse une information à l'administrateur, cette information étant conservée par l'administrateur avec la question;
que l'administrateur avertit l'utilisateur de la réception de la réponse;
et que l'utilisateur peut prendre connaissance de la réponse, au moyen des codes d'accès et d'identification précités.

2. Procédé de connexion informatisée selon la revendication 1 **caractérisé par le fait que** le fichier de données est transmis par l'utilisateur avant transmission de la question, l'administrateur conservant ledit fichier de données avec les codes d'accès et d'identification propres au fichier de données et à l'utilisateur.

3. Procédé de connexion informatisée selon les revendications 1 ou 2 **caractérisé par le fait qu'**à réception de la question, l'administrateur transmet à l'utilisateur une demande de paiement et vérifie le règlement avant de procéder à l'examen de la question et à sa transmission à l'informateur.

4. Procédé de connexion informatisée selon la revendication 3 **caractérisé par le fait qu'**avant la vérification positive du paiement, la question et, éventuellement le fichier de données sont stockés de manière provisoire, tandis qu'après la vérification positive du paiement, le stockage est fait de manière définitive.

5. Procédé de connexion informatisée selon l'une quelconque des revendications précédentes **caractérisé par le fait que** l'administrateur conserve pendant une durée déterminée toutes les questions et toutes les informations en réponse correspondantes avec les codes d'accès et d'identification propres à chaque question, au fichier de données associé et à chaque utilisateur, et que chaque utilisateur peut accéder uniquement aux questions qu'il a lui-même posées ainsi qu'aux informations en réponse correspondantes.

6. Système informatisé pour la transmission d'informations par un réseau d'interconnexion tel que le réseau internet entre des utilisateurs et une pluralité d'informateurs, comprenant:
des moyens de mémoire (11, 12) pour des données numériques cryptées incluant des questions formulées par les utilisateurs, éventuellement un ou plusieurs fichiers de données et des codes d'accès et d'identification propres à chaque question, à chaque fichier de données et à chaque utilisateur;
des moyens de mémoire (13) pour des données numériques cryptées incluant des informations en réponse aux questions, préparées par différents informateurs sélectionnés;
un poste central d'administration (1) comprenant des mémoires de stockage de bases de données numériques pour les fichiers de données, pour les coordonnées des utilisateurs (10) et des informateurs (14) et pour les questions et les informations en réponse et des moyens de programme (9) capables de générer et de lire des codes d'accès et d'identification et de gèrer la transmission de messages entre le poste central et les utilisateurs et entre le poste central et les informateurs;
une pluralité de postes individuels d'utilisateur (2-4) reliés par l'intermédiaire du réseau d'interconnexion au poste central d'administration de façon à permettre à chaque utilisateur de transmettre audit poste central des données numériques cryptées incluant une question, éventuellement un ou plusieurs fichiers de données et des codes d'accès et d'identification et de recevoir des messages émis par le poste central;
une pluralité de postes individuels d'informateur (5-8) reliés par l'intermédiaire du réseau d'interconnexion au poste central d'administration de façon à permettre à chaque informateur de recevoir des messages émis par le poste central contenant des codes d'accès correspondant à la question et aux fichiers de données accompagnant la question et de transmettre audit poste central une information en réponse à une question.

7. Système informatisé selon la revendication 6 **caractérisé par le fait que** le poste central comprend des moyens pour mémoriser un ensemble de questions type.

8. Système informatisé selon les revendications 6 ou 7 **caractérisé par le fait que** le poste central comprend des moyens pour mémoriser et conserver en mémoire pendant une durée déterminée, les questions et les informations en réponse correspondantes associées chacune à des codes d'accès et d'identification de l'utilisateur correspondant.

9. Produit de programme d'ordinateur comportant des moyens de code-programme aptes à mettre en oeuvre le procédé selon l'une quelconque des revendications 1 à 5 lorsqu'il est exécuté dans un processeur.
